# EUROPEAN PATENT APPLICATION

(11) **EP 2 518 535 A1**
(43) Date of publication of application: **31.10.2012**
(21) Application number: 10839053.5
(22) Date of filing: 19.10.2010
(51) Int. Cl.: G02B 5/08, B32B 15/08, F24J 2/10

(54) **FILM MIRROR AND PROCESS FOR PRODUCTION THEREOF, AND REFLECTION DEVICE FOR SOLAR POWER GENERATION PURPOSES**

(30) Priority: 21.12.2009 JP 2009288776
(71) Applicant: Konica Minolta Opto, Inc., Hachioji-shi Tokyo 192-8505 (JP)
(72) Inventor: MURAKAMI Shuji, Tokyo 191-8511 (JP)
(74) Representative: Henkel, Breuer & Partner
(86) International application number: PCT/JP2010/068320
(87) International publication number: WO 2011/077816

(57) **Abstract**

Disclosed arc: a film mirror which can have a satisfactorily reduced regular reflectance even when used as a film mirror for solar power generation purposes under severe environments for a long period, is lightweight and flexible, can be produced at a reduced cost, has an enlarged surface area, can be produced on a large scale, has excellent light resistance and weather resistance, and has a good regular reflectance to solar light; a process for producing the film mirror; and a reflection device for solar power generation purposes, which is equipped with the film mirror. The film mirror is characterized by comprising a resin base, a silver reflective layer, and a layer containing an ultraviolet ray absorber, wherein at least one component contained in the ultraviolet ray absorber fulfills the requirement represented by formula (1): Aa ≥ 1.2×Ab (wherein Aa represents the absorbance at a peak having an absorption maximum at a wavelength of 260 to 320 nm; and Ab represents the absorbance at a peak having an absorption maximum at a wavelength of 321 to 400 nm).

## Description

### TECHNICAL FIELD

The present invention relates to a film mirror exhibiting not only light resistance but also weather resistance, and having excellent regular reflectance to solar heat, a method of manufacturing the film mirror, and a solar heat power generation reflection device equipped with the film mirror.

### BACKGROUND

In recent years, as alternative energy by which fossil fuel energy such as petroleum, natural gas or the like might be replaced, attention has recently been focused on coal energy, biomass energy, nuclear energy, and natural energy such as wind power energy, solar energy or the like, but it would appear that natural energy in large quantity, which is most stable as the alternative energy by which fossil fuel energy is to be replaced is solar energy.

However, the solar energy is to be dominant alternative energy, but in view of utilization thereof, there would appear a problem such that (1) energy density of solar energy is low, and (2) the solar energy is difficult to be stored and transporter.

In relation to this, it is proposed that the problem concerning low energy density of solar energy is solved by collection solar energy with a giant reflection device.

A mirror made of glass has been conventionally utilized for a reflection device, since the reflection device is exposed to UV radiation and heat from sunlight, weather, sand storm or the like. There was a problem such that the plant construction was costly because the mirror made of glass exhibited high durability against the environment, but was damaged at the time of transportation, and a mount where the mirror was placed was strengthened since the mirror made of glass was large in mass.

In order to solve the above-described problem, it has been thought that the mirror made of glass is replaced by a reflection sheet made of a resin (refer to Patent Document 1, for example). However, in cases where it is used as a film mirror for solar heat power generation, the film mirror is exposed directly to sunlight for a long time. For this reason, there was a problem such that a resin substrate was degraded by UV radiation, leading to low transmittance via discoloration, and as a result, reflectance of a mirror was lowered.

In cases where high reflectance is obtained on the purpose of collecting solar heat, a technique by which a metal layer is formed of silver having high reflectance in the visible region is proposed as disclosed in Patent Document 2. However, initial reflectance was possible to be increased by using silver for a reflection layer, but it was difficult to sufficiently suppress a decline of reflectance during use for a long duration via deterioration of a resin naturally caused by UV radiation.

In relation to this, a technique by which a layer containing a benzotriazole based UV absorbent is formed on a surface layer of a film mirror is proposed in Patent Document 3. In Patent Document 3, proposed is a technique by which degradation of a plastic substrate caused UV radiation is suppressed by improving compatibility of a resin with a benzotriazole based UV absorbent in the surface layer via addition of a crosslinkable monomer having a vinyl group into the surface layer, and by increasing an addition amount of the UV absorbent However, even though using such a technique, there apparently appeared a problem such that when it was used as a film mirror for solar heat power generation which was exposed to sunlight under the environment where temperature and humidity were extremely changed, a UV absorbent contained in large quantity seeped out (referred to also as "bleed-out") because of aging, and peeling was caused by reduction of adhesiveness between layers; and another problem such that decline in regular reflectance of a film mirror occurred via deformation of a silver reflection layer.

### PRIOR ART DOCUMENT

### PATENT DOCUMENT

Patent Document 1: Japanese Patent O.P.I. (Open to Public Inspection) Publication No. 2005-59382
Patent Document 2: Japanese Patent O.P.I. Publication No. 6-38860
Patent Document 3: U.S. Patent Application Publication No. 2005/0159514

### DISCLOSURE OF THE INVENTION

### PROBLEMS TO BE SOLVED BY THE INVENTION

The present invention was made on the basis of the above-described problems, and it is an object of the present invention to provide a film mirror having regular reflectance excellently to solar heat, and exhibiting excellent light resistance and weather resistance, which is possible to sufficiently suppress a decline of regular reflectance; is lightweight and flexibly; and can be large-area-produced and mass-produced at low manufacturing cost, even though it is used as a film mirror for solar heat power generation under the extreme weather condition for a long duration, and also to provide a method of manufacturing the film mirror and a reflection device for solar heat power generation equipped with the film mirror.

### MEANS TO SOLVE THE PROBLEMS

The above-described problem relating to the present invention are solved by the following structures.

(Structure 1) A film mirror comprising a resin substrate and provided thereon, a silver reflection layer and a layer comprising at least one UV absorbent, provided on a light incidence side beyond the resin substrate and the silver reflection layer,
wherein the at least one UV absorbent satisfies the following Formula 1:

Formula 1 Aa ≥ 1.2 x Ab

, where Aa represents absorbance at an absorption maximum peak in a wavelength range of 260 ― 320 nm, provided that the absorbance is set to 0 when no absorption peak is present in the wavelength range of 260 ― 320 nm, and Ab represents absorbance at an absorption maximum peak in a wavelength range of 321 ― 400 nm, provided that the absorbance is set to 0 when no absorption peak is present in the wavelength range of 321 ― 400 nm.

(Structure 2) The film mirror of Structure 1, wherein the layer comprising the at least one UV absorbent comprises a UV absorbent satisfying Formula I in an amount of 3 ― 14% by weight.

(Structure 3) The film mirror of Structure 1 or 2, wherein the at least one UV absorbent comprises a UV absorbent comprising a triazine skeleton, a benzophenone skeleton or a cyanoacrylate skeleton.

(Structure 4) The film mirror of any ane of Structures 1 ― 3, comprising a gas barrier layer having a water vapor transmittance of 1 g/m²·day/µm or less at 40 °C and 90%RH, provided on a light incidence side beyond the resin substrate and the silver reflection layer.

(Structure 5) The film mirror of any one of Structures 1 ― 4, wherein the layer comprising the at least one UV absorbent comprises an acrylate based resin, and the UV absorbent satisfying Formula 1 comprises a cyanoacrylate skeleton.

(Structure 6) The film mirror of any one of Structures 1 ― 5, wherein the resin substrate comprises a layer containing polyethylene terephthalate called PET, or polyethylene naphthalate called PEN, the layer provided on a side away from the light incidence side beyond the silver reflection layer.

(Structure 7) The film mirror of any one of Structures 1 ― 6, comprising a layer containing a corrosion inhibitor, the layer being adjacent to the silver reflection layer.

(Structure 8) The film mirror of any one of Structures 1 ― 7, comprising a scratch protection layer as an outermost layer.

(Structure 9) The film mirror of any one of Structures 1 ― 8, having a total thickness of 75 ― 250 µm.

(Structure 10) A method of manufacturing a film mirror of any one of Structures 1 ― 9, comprising the step of forming the silver reflection layer via evaporation of silver.

(Structure 11) A reflection device for solar heat power generation, comprising the film mirror of any one of Structures 1 ― 9 or a film mirror obtained by the method of Structure 10, wherein the reflection device comprises a metal substrate and attached thereon, the film mirror provided via an adhesion layer coated on a surface of the resin substrate on a side where the silver reflection layer is present, or another adhesion layer coated on an opposite surface of the resin substrate.

### EFFECT OF THE INVENTION

Owing to the present invention, it has become possible that the wavelength transmitting a silver reflection layer is efficiently blocked, and a decline of regular reflectance produced via deterioration of a layer provided on the side away from the light incidence side of the silver reflection layer, caused by UV radiation.

These effects can provide a film mirror having excellent regular reflectance, to solar heat, and exhibiting excellent light resistance and weather resistance, which sufficiently suppresses a decline of regular reflectance; is lightweight and flexible; and can be large-area-produced and xnass-produced at low manufacturing cost, even though it is used as a film mirror for solar heat power generation under the extreme weather condition for a long duration, and can also provide a method of manufacturing the film mirror and a reflection device for solar heat power generation equipped with the film mirror.

### DESCRIPTION OF THE PREFERRED EMBODIMENTS

After considerable effort during intensive studies done by the inventor on the basis of the above-described situation, it became clear that when a film mirror fitted with a silver reflection layer was used as a reflection device for solar heat power generation, though high reflectance was able to be obtained during beginning of use owing to high reflectance of the silver reflection layer, a problem of a decline of regular reflectance was produced when the film mirror was exposed to strong sunlight for a long duration. It is considered to be one of the causes that the silver reflection layer is different from a reflection layer made of aluminum or the like, and exhibits a property transmitting UV radiation at a wavelength of 320 nm or less. When employing a film mirror as a mirror for solar heat power generation, the film mirror is attached onto a metal support made of metal such as aluminum or the like to use the film mirror, since only the film mirror itself can not keep self-supporting ability. In this case, after UV radiation which has transmitted the silver reflection layer transmits a lower layer of the silver reflection layer (a layer on the side away from the light incidence side), it is reflected by a metal support, and enters the lower layer of the silver reflection layer again. It was found out that degradation of the silver reflection layer was accelerated via deterioration of the lower layer of the silver reflection layer caused by UV radiation, or excitation of a region between the silver refection layer and the lower layer, whereby a decline of regular reflectance of the silver reflection layer was produced.

It appears that such a problem is possible to be solved by adding a UV absorbent as described in cited document 3. However, since a property absorbing the entire UV range in a wavelength of 400 nm or less is conventionally desired for the UV absorbent, a UV absorbent averagely having large absorption to light in the entire UV range is used. However, since a UV absorbent having high UV absorption function in the entire UV range was practically difficult to be produced, and the UV absorbent disclosed in cited document 3 exhibited insufficient absorption function to UV radiation having a wavelength of 320 nm or less, a decline ofregular reflectance could not be suppressed when it was used under the environment directly exposed to sunlight for a long duration. Then, the inventor realized that the above-described decline of regular reflectance was produced when a resin substrate and a resin layer such as an adhesion layer or the like which were provided as the adjacent layer on the side away from the light incidence side of the silver reflection layer.

It is found out that a UV absorbent exhibiting large UV radiation absorptive action with respect to light having a wavelength of 320 nm or less, which transmits the silver reflection layer, and small UV radiation absorptive action with respect to light having a wavelength of 321 ― 400 nm is employed to suppress undesired UV radiation absorptive action, and UV radiation transmitting the silver reflective layer is efficiently absorbed to effectively suppress a decline of regular reflectance, and also to effectively suppress degradation of the UV absorbent itself caused by UV radiation.

Next, the present invention, constituent elements thereof, and embodiments to implement the present invention will be described in detail.

### (Structural outline of film mirror)

The film mirror relating to the present invention is a film mirror comprising a resin substrate and provided thereon, a silver reflection layer and a layer comprising at least one UV absorbent, provided on a light incidence side beyond the resin substrate and the silver reflection layer, wherein the at least one UV absorbent satisfies the foregoing Formula 1. It is also a preferred embodiment to provide a specific functional layer such as a gas barrier layer, a scratch protection layer or the like.

### (UV absorbent)

It is a feature that at least one UV absorbent used for a film mirror relating to the present invention satisfies the following Formula 1.

Formula 1 Aa ≥ 1.2 x Ab, where Aa represents absorbance at an absorption maximum peak in a wavelength range of 260 ― 320 nm, provided that the absorbance is set to 0 when no absorption peak is present in the wavelength range of 260 ― 320 nm, and Ba represents absorbance at an absorption maximum peak in a wavelength range of 321 ― 400 nm, provided that the absorbance is set to 0 when no absorption peak is present in the wavelength range of 321 ― 400 nm. The absorption maximum peak in a wavelength range of 260 ― 320 nm, and absorbance thereof can be measured by a spectrophotometer.

According to the embodiment of the present invention, since UV radiation transmitting the silver reflection layer can be effectively absorbed, an addition amount may not be excessively increased, resulting in reduction of a process load, and adhesiveness between layers caused by bleed-out can be suppressed, and not only degradation of constituting layers caused by aging via degradation of the UV absorbent itself caused by UV radiation but also a decline of regular reflectance produced by the degradation of constituting layers can be suppressed.

The UV absorbent satisfying the foregoing Formula 1 according to the present invention is contained in any one of the layers provided on the light incidence side beyond the resin substrate and the silver reflection layer.

A UV absorbent containing a triazine skeleton, a benzophenone skeleton or a cyanoacrylate skeleton is preferable as a UV absorbent satisfying the foregoing Formula 1. Specific examples thereof include UVINUL 3000, UVINUL 3008, UVINUL 3030, UVINUL 3035, UVINUL 3039, UVINUL 3040 and UVINUL 3088 produced by BASF; TINUVIN 400 and TINUVIN 1577 produced by Ciba Japan K.K.; LA 51 produced by ADEKA Corporation; and so forth, but the present invention is not limited to these compounds. An amount of UV absorbent satisfying Formula 1 to be used is preferably 3 ― 14% by weight, and more preferably 3 ― 10% by weight When exceeding 14% by weight, a coating solution in the process tends to become unstable since influence to the silver reflection layer via bleed-out by aging deteriorates adhesiveness. In the case of less than 0.1 % bay weight, the effect of improving weather resistance is reduced.

### (Other UV absorbents)

In the present invention, the following UV absorbents can be further used in combination.

Benzophenone based UV absorbents, benzotriazole based UV absorbents, phenyl salicylate based UV absorbents, triazine based UV absorbents, and so forth are exemplified as UV absorbents used in combination.

Examples of benzophenone based UV absorbents include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, 2,2', 4,4'-tetrahydroxy-benzophenone, and so forth.

Examples of benzatriazole based UV absorbents include 2-(2'-hydroxy-5-methylphenyl) benzotriazole, 2-(2'-hydroxy-3' 5'-di-t-butylphenyl) benzotriazole, 2-(2-hydroxy-3'-t-butyl-5'-methylphenyl) benzotriazole, and so forth.

Examples of phenyl salicylate based UV absorbents include phenyl salicylate, 2-4-di-t-butylphenyl-3, 5-di-t-butyl-4-hydroxybenzoate, and so forth. Examples ofhindered amine based UV absorbents include bis (2, 2, 6, 6-tetramethyl piperidine-4-yl) sebacate, and so forth.

Examples of triazine based UV absorbents include 2,4-diphenyl-6-(2-hydroxy-4-methoxyphenyl)-1, 3, 5-triazine; 2,4-diphenyl-6-(2-hydroxy-4-ethoxyphenyl)-1, 3, 5-triazine, 2,4-diphenyl-(2-hydroxy-4-propoxyphenyl)-1, 3, 5-triazine; 2, 4-diphenyl-(2-hydroxy-4-butoxyphenyl)-1, 3, 5-triazine; 2, 4-diphenyl-6-(2-hydroxy-4-butoxyphenyl)-1, 3, 5-triazine; 2, 4-diphenyl-6-(2-hydroxy-4-hexyloxyphenyl)-1, 3, 5-triazine, 2, 4-diphenyl-6-(2-hydroxy-4-octyloxyphenyl)-1, 3, 5-triazine; 2, 4-diphenyl-6-(2-hydroxy-4-dodecyloxyphenyl)-1, 3, 5-triazine; 2, 4-diphenyl-6-(2-hydroxy-4-benzyloxyphenyl)-1, 3,5-triazine, and so forth.

The UV absorbent usable in combination contains a compound having a function through which energy possessed by UV radiation in addition to the above-described is converted into oscillation energy in the molecule, and the oscillation energy is released as thermal energy or the like. Further, a light stabilizer or the like which acts like an optical energy conversion agent, called one producing an effect via use of an antioxidant, a colorant or the like in combination, or called quencher can be used in combination.

A binder in a layer containing a UV absorbent may be used as a resin layer, or used as a layer made of an inorganic material, but it is used as a resin layer in view of productivity. When it is used as a resin layer, it is possible to use a conventionally known thermoplastic resin or thermosetting resin. For example, a polyester based resin, an acrylate based resin, a melamine based resin, an epoxy based resin, a polyamide resin, a vinyl chloride based resin, a vinyl chloride ― vinyl acetate copolymer and so forth can be used singly or in mixture of these resins, but a resin in which a polyester resin and a melamine resin are mixed is preferable in view of weather resistance. However, a resin constituting a layer containing a UV absorbent is preferably one exhibiting strong resistance to the UV absorbent, and among those, an acrylate based resin is preferably usable. Further, when the acrylate based resin is used, as the UV absorbent, a UV absorbent satisfying the foregoing Formal 1, which possesses a cyanoacrylate skeleton is preferably used.

### (Resin substrate)

As a resin substrate (support) relating to the present invention, usable are conventionally known various resin films. Examples thereof include cellulose ester based films, polyester based films, polycarbonate based films, polyarylate based films, polysulfon (including polyethersulfon) based films, polyester films such as a polyethylene terephthalate film, a polyethylene naphthalate film and so forth, a polyethylene film, a polypropylene film, cellophane, a cellulose diacetate film, a cellulose triacetate film, a cellulose acetate propionate film, a cellulose acetate butyrate film, polyvinylidene chloride, a polyvinyl alcohol film, an ethylene vinyl alcohol film, syndiotactic polystyrene based films, a polycarbonate film, a norbornene film, a polymethyl pentene film, a polyether ketone film, a polyether ketone imide film, a polyamide film, a fluorine resin film, a nylon film, a polymethyl methacrylate film, a polyacrylic film, and so forth. A polycarbonate film, a polyester film, a norbornene film, and a cellulose ester film, a polymethyl methacrylate film and a polyacrylic film are more desirable.

Of these, polyester films, a cellulose ester film, a polymethyl methacrylate film and a polyacrylic film are preferable, and a polyethylene terephthalate (PET) film and a polyethylene naphthalate (PEN) film are specifically preferable. These films each may be a film prepared as a melt-cast film, or may be a film prepared as a solution-cast film. When these resin substrates each are possessed as an adjacent layer on the side away from the light incidence side of a silver reflection layer, there appears a problem such as degradation caused by UV radiation having transmitted the silver reflection layer, and degradation of regular reflectance along with this, but such a problem is possible to be effectively suppressed by making use of structures of the present invention.

The thickness of the resin substrate is preferably set to an appropriate thickness according to the purpose, kinds of the resin, and so forth. For example, a thickness range of 10 ― 300 µm is conventional; a thickness range of 20― 200 µm is preferable; and a thickness range of 30 ― 100 µm is specifically preferable.

### (Adhesion layer)

A film mirror relating to the present invention may possess an adhesion layer. The adhesion layer may be one in which adhesiveness between a silver reflection layer and a resin substrate is increased, and also one in which adhesiveness of other constituting layers to each other is increased, but it is preferably made of a resin In cases where an adjacent layer on the side away from the light incidence side of the silver reflection layer is placed as an adhesion layer, it appears that decline of regular reflectance occurs via degradation of the adhesion layer, but in the case of structures of the present invention, decline of such a regular reflectance can be suppressed. In cases where the adhesion layer is used as a layer adjacent to the silver reflection layer, adhesion of the resin structure (resin film) to a silver reflection layer, heat resistance when forming the silver reflection layer via a vacuum evaporation method or the line, and smooth flatness to extract high reflection performance originally possessed by the silver reflection layer should be provided

The resin as a binder used for the adhesion layer is not specifically limited as long as it satisfies the conditions of the above-described adhesion, heat resistance and smooth flatness. A polyester based resin, an acrylate based resin, a melamine based resin, an epoxy based resin, a polyamide resin, a vinyl chloride based resin, a vinyl chloride―vinyl acetate copolymer based resin can be used singly, or in mixture of these resins. A resin in which a polyester based resin and a melamine based resin are mixed is preferable in view of weather resistance. Further, it is more preferable to make it to be a thermosetting resin in which a hardener such as isocyanate or the like is mixed. In the case of the polyester based resin, polyethylene terephthalate (PET) and polyethylene naphthalate (PEN) are preferable.

The adhesion layer preferably has a thickness of 0.01 ― 3 µm, and more preferably has a thickness of 0.1 ― 1 µm in view of adhesiveness, smooth flatness, reflectance of a reflective material and so forth.

As a method of forming an adhesion layer, usable is a conventionally known coating method such as a gravure coating method, a reverse coating method, a die coating method or the like.

### (Silver reflection layer)

Any of a wet process method and a dry process method is usable as a method of forming a silver reflection layer relating to the present invention.

A wet process method is collectively designated as a plating method, and is a method by which metal is precipitated from a solution to form a film. Specific example thereof include silver mirror reaction and so forth.

On the other hand, a dry process method is collectively designated as a vacuum deposition method, and examples thereof include a resistance heating method, a vacuum evaporation method, an electron beam heating vacuum evaporation method, an ion plating method, an ion beam assisted vacuum evaporation method, a sputtering method and so forth. Specifically, an evaporation method by which film formation can be continuously conducted via a roll-to-roll system is preferably used for the present invention. That is, as a manufacturing method by which a film mirror of the present invention is prepared, preferable is the method possessing the step of forming a silver reflection layer via evaporation of silver.

The silver reflection layer preferably has a thickness of 10 ― 200 nm, and more preferably has a thickness of 30 ― 150 nm.

In the present invention, the silver reflection layer may be placed on the light incidence side, or on the opposite side with respect to a resin substrate (support), but in order to suppress degradation of a resin caused by light, it is preferable that it is placed on the light incidence side since the support is made of a resin.

### (Silver adjacent layer)

A silver adjacent layer adjacent to the upper portion of the silver reflection layer (on the light incidence side) may be formed in a film mirror relating to the present invention. When the silver reflection layer is provided on the side away from the light incidence side with respect to a resin substrate, the adjacent layer on the light incidence layer, which contains a corrosion inhibitor, suppresses degradation caused by corrosion of silver, and it preferably contributes scratch protection for the silver reflection layer, and improvement of adhesion to a barrier layer as well as a scratch propection layer formed on the outer side of the silver adjacent layer.

Resins each as a binder used for a silver adjacent layer such as polyester based resins, acrylic resins, melamine based resins, epoxy based resins and so forth can be used singly, or in mixture of these resins, but acrylic resins are preferable in view of weather resistance, and further, it is preferable to use a thermosetting resin in which a hardener such as isocyanate or the like is mixed.

As isocyanate, usable are various kinds of isocyanate which have been conventionally used, such as a TDI (tolylene diisocyanate) type, an XDI (xylene diisocyanate) type, an MDI (methylene diisocyanate) type, an HMDI (hexamethylene diisocyanate) type, but an XDI type isocyanate, an MDI type isocyanate or an HMDI type isocyanate is preferably used.

The silver adjacent layer preferably has a thickness of 0.01 ― 3 µm, and more preferably has a thickness of 0.1 ―1 µm in view of adhesiveness, weather resistance and so forth.

As a method of forming a silver adjacent layer, usable is a conventionally known coating method such as a gravure coating method, a reverse coating method, a die coating method or the like.

### (Corrosion inhibitor)

A film mirror relating to the present invention preferably possesses a layer containing a corrosion inhibitor for a silver reflection layer, which is adjacent to the silver reflection layer. Herein, "corrosion" means a phenomenon in which metal (silver) is chemically or electrochemically eroded by an environmental substrate enclosing the metal (silver), or is degraded in material quality (refer to JIS Z0103-2004).

As to a film mirror relating to the present invention, the foregoing adhesion layer contains an antioxidant, and the foregoing upper adjacent layer contains a corrosion inhibitor possessing an adsorptive group with respect to silver.

In addition, as to a content of the corrosion inhibitor, the optimum content is different, depending on a compound to be used, but a content of 0.1 ― 1.0/m² is conventionally preferable.

Broadly speaking as a corrosion inhibitor for a silver reflection layer, preferably used are a corrosion inhibitor possessing an adsorptive group to silver and an antioxidant.

### <Corrosion inhibitor possessing adsorptive group to silver>

The corrosion inhibitor possessing an adsorptive group to silver should be selected from the group consisting of amines and their derivatives, compounds each possessing a pyrrole ring, compounds each possessing a triazole ring compounds each possessing a pirazole ring compounds each possessing a thiazole ring, compounds each possessing an imidazole ring, copper chelate compounds, thioureas, compounds each possessing a mercapto group, and at least one of naphthalane-based kinds or a mixture thereof.

Examples of amines and their derivatives include ethyl amine, lauryl amine, tri-n-butyl amine, o-toluidine, diphenyl amine, ethylene diamine, diethylene triamine, triethylene tetramine, tetraethylene pentamine, monoethanol amine, diethanol amine, triethanol amine, 2N-dimethylethanol amine, 2-amino-2-methyl-1, 3-profane diol, acetoamide, acrylamide, benzamide, p-ethoxychrysoidine, dicyclohexyl ammonium nitrite, dicyclohexyl ammonium salicylate, monoethanol amine benzoate, dicyclohexyl ammonium benzoate, diisopropyl ammonium benzoate, diisopropyl ammonium nitrite, cyclohexyl amine carbamate, nitronaphthalene ammonium nitrite, cyclohexyl amine benzoate, dicyclohexyl ammonium cyclohexane carboxylate, cyclohexyl amine cyclohexane carboxylate, dicyclohexyl ammonium acrylate, cyclohexyl amine acrylate and so forth, or mixtures thereof.

Examples of compounds each possessing a pyrrole ring include N-butyl-2, 5-dimethyl pyrrole, N-phenyl-2, 5-dimethyl pirrole, N-phenyl-3-formyl-2, 5-dimethyl pirrole, N-phenyl-3, 4-diformyl-2, 5-dimethyl pirrole and so forth, or mixtures thereof.

Examples of compounds each possessing a triazole ring include 1, 2, 3-triazole; 1,2,4-triazole; 3-mercapto-1, 2, 4-triazole; 3-hydroxy-1, 2, 4-triazole; 3-methyl-1, 2, 4-triazole; 1-methyl-1, 2, 4-triazole; 1-methyl-3-mercapto-1, 2, 4-triazole-, 4-methyl-1, 2, 3-triazole; benzotriazole; tlyltriazole; 1-hydroxy benzotriazole; 4, 5, 6, 7-tetrahydrotriazole; 3-amino-1, 2, 4-triazole; 3-amino-5-methyl-1, 2, 4-triazole; carboxybenzotriazole; 2-(2'-hydroxy-5'-methylphenyl) benzotriazole; 2-(2'-hydroxy-5'-tert-butylphenyl) benzotriazole; 2-(2' -hydroxy-3', 5'-di-tert-butylphenyl) benzotriazole;2-(2'-hydroxy-4-octoxyphenyl) benzotriazole and so forth; or mixtures thereof.

Examples of compounds each possessing a pirazole ring include pirazole, pyrazoline, pyrazolone, pyrazolidine, pyrazolidone, 3, 5-dimethyl pyrazole, 3-methyl-5-hydroxy pyrazole, 4-amino pyrazole and so forth, or mixtures thereof

Examples of compounds each possessing a thiazole ring include thiazole, thiazoline, thiazolone, thiazolidine, thiazolidone, isothiazole, benzothiazole, 2-N, N-diethylthiobenzothiazole, P-dimethylaminobenzal rhodanine, 2-mercaptobenzothiazole and so forth, or mixtures thereof

Examples of compounds each possessing an imidazole ring include imidazole, histidine, 2-heptadecyl imidazole, 2-methyl imidazole, 2-ethyl-4-methyl imidazole, 2-phenyl imidazole, 2-undecyl imidazole, 1-benzyl-2-methyl imidazole, 2-phenyl-4-methyl imidazole, 1-cyanoethyl-2-methyl imidazole, 1-cyanoethyl-2-phenyl imidazole,1-cyanoethyl-2-ethyl-4-methyl imidazole,1-cyanoethyl-2-undecyl imidazole, 2-phenyl-4-methyl-5-hydromethyl imidazole, 2-phenyl-4, 5-dihydroxymethy imidazole, 4-formyl imidazole, 2-methyl-4-formyl imidazole, 2-phenyl-4-formyl imidazole, 4-methyl-5-formyl imidazole, 2-ethyl-4-methyl-5-fonnyl imidazole, 2-phenyl-4-rnethyl-4-formyl imidazole, 2-mercaptobenzimidazole and so forth, or mixtures thereof.

Examples of compounds each possessing an indazole ring include 4-chloroindazole, 4-nitroindazole, 5-nitroindazole, 4-chloro-5-nitroindazole and so forth, or mixtures thereof

Examples of copper chelate compounds include acetylacetone copper, ethylene diamine copper, copper phthalocyanine, ethylene diamine tetraacetate copper, copper hydroxyquinoline and so forth, or mixtures thereof

Examples of thioureas include thiourea, guanylthiourea and so forth, or mixtures thereof.

Examples of compounds each possessing a mercapto group in addition to materials having been already described above include a mercaptoacetic acid, thiophenol, 1,2-ethane diol, 3-mercapto-1, 2,4-triazole, 1-methyl-3-mercapto-1, 2, 4-triazole, 2-mercaptobenzothiazole, 2-2-mercaptobenzimidazole, glycol dimercaptoacetate, 3-mercaptopropyltrimefhoxy silane and so forth, or mixtures thereof.

Examples of the naphthalane-based include thionalide and so forth.

### <Antioxidant>

As a corrosion inhibitor for a silver reflection layer used for a film mirror relating to the present invention, also usable is an antioxidant.

As the antioxidant, preferably used are phenol based antioxidants, thiol based antioxidants and phosphite based antioxidants.

Examples of phenol based antioxidants include 1, 1, 3-tris (2-methyl-4-hydroxy-5-t-butylphenyl) butane, 2, 2'-methylene bis (4-ethyl-6-t-butylpbenol), tetrakis-{methylene-3-(3', 5-di-t-butyl-4'-hydroxyphenyl)propionate} methane, 2, 6-di-t-butyl-p-cresol, 4, 4'-thiobis (3-methyl-6-t-butylphenol), 4, 4'-Butylidene bis (3-methyl-6-t-butylphenol), 1, 3, 5-tris (3', 5'-di-t-butyl-4'-hydroxybenzyl)-S-triazine-2, 4, 6-(1H, 3H, 5H) trione, stearyl-β-(3, 5-di-t-butyl-4-hydroxyphenyl) propionate, triethylene glycol bis [3-(3-t-butyl-5-methyl-4-hydroxyphenyl) propionate], 3.9-bis [1, 1-dimethyl-2-[β-(3-t-butyl-4-hydroxy-5-methylphenyl) propionyloxy] ethyl]-2, 4, 8, 10-tetraoxaspiro [5, 5] undecane, 1, 3, 5-trimethyl-2, 4, 6-tris (3, 5-di-t-butyl-4-hydroxybenzyl) benzene, and so forth Specifically, the phenol based antioxidants each preferably have a molecular weight of 550 or more.

Examples of thiol based antioxidants include distearyl-3, 3'-thiodipropionate, pentaerythritol-tetrakis-(β-lauryl-thiopropionate), and so forth.

Examples of phosphite based antioxidants include tris (2, 4-di-t-butylphenyl) phosphite, distearyl pentaerythritol diphosphite, di (2, 6-di-t-butylphenyl) pentaerythritol diphosphate, bis-(2, 6-dit-butylphenyl) pentaerythritol diphosphite, tetrakis (2, 4-di-t-butylphenyl) 4, 4'-biphenylene-diphosphonite, 2, 2'-methylene bis (4, 6-di-t-butylphenyl) octylphosphite, and so forth.

In addition, in the present invention, the above-described antioxidant and the following light stabilizer can be used in combination.

Examples of hindered amine based light stabilizers include bis (2, 2, 6, 6-tetramethyl-4-piperidyl) sebacate, bis (1, 2, 2, 6, 6-pentamethyl-4-piperidyl) sebacate, bis (1, 2, 2, 6, 6-pentarnethyl-4-piperidyl)-2-(3, 5-di-t-butyl-4-hydroxybendyl)-2-n-butylmalonate, 1-methyl-8-(1, 2, 2, 6, 6-pentamethyl-4-piperidyl) sebacate, 1-[2-{3-(3, 5-di-t-butyl-4-hydroxyphenyl) propionyloxy}-2. 2. 6, 6-tetramethyl piperidine, 4-benzoyloxy-2, 2, 6, 6-tetramethyl piperidine, tetrakis (2, 2, 6, 6-tetramethyl-4-piperidyl)-1, 2, 3, 4-butane-tetracarboxylate, triethylene diamine, 8-acetyl-3-dodecyl-7, 7, 9, 9-tetramethyl-1, 3, 8-triazaspiro [4,5] decane-2, 4-dione, and so forth.

As nickel based UV radiation stabilizer in addition to those described above, also usable are include {2, 2'-thiobis (4-t-octylphenolate)}-2-ethylhexyl amine nickel (II), nickel complex-3, 5-di-t-butyl-4-hydroxybenzyl·phosphoric acid monoethylate, nickel-dibutyl-dithiocarbarnate, and so forth.

Specifically, the hindered amine based light stabilizers are preferably hindered amine based light stabilizers each containing only tertiary amine, and preferable examples thereof include bis (1, 2, 2, 6, 6-pentamethyl-4-piperidyl)-sebacate, bis (1, 2, 2, 6, 6-pentamethyl-4-piperidyl)-2-(3, 5-di-t-butyl-4-hydroxybenzyl)-2-n-butylmalonate, or a condensate of 1, 2, 2, 6, 6-pentamethyl-4-piperidinol / tridecyl alcohol and 1, 2, 3, 4-butane tetracarboxylic acid.

### (Gas barrier layer)

A film mirror relating to the present invention preferably possesses a gas barrier layer provided on the light incidence side away from a resin substrate and a silver reflection layer.

The gas barrier layer relating to the present invention is provided in order to suppress degradation of a resin substrate, various functional elements to be protected by the resin substrate and so forth, specifically caused by high humidity, but those having specific function and application are allowed to be used, and various kinds of gas barrier layers can be formed as long as the above-described features are maintained. In the present invention, a gas barrier layer is preferably provided on the upper side of the foregoing silver adjacent layer.

A dampproof property of the gas barrier layer is preferably adjusted so as to make the dampproof property of the gas barrier layer to be a water vapor transmittance of 1 g/m²_{˙}day/µm or less; preferably 10⁻¹ g/m²_{˙}day/µm or less; and more preferably 10⁻² glm²_{˙}day/µm or less at 40 °C and 90%RH. Further, an oxygen transmittance of 0.6 ml/m²/day/atm or less at 23°C and 90%RH is preferable.

As to the gas barrier layer relating to the present invention, a formation method thereof is not specifically limited, but after coating a ceramic precursor as an inorganic oxide film, a method by which a coating film is subjected to heating, or exposed to UV radiation to form an inorganic oxide film is preferably used.

### <Ceramic precursor>

After coating a ceramic precursor to form an inorganic oxide film via heating, a gas barrier layer relating to the present invention can be formed via application af a conventional heating method, but it is preferably formed via local heating. The ceramic precursor is preferably an organometallic compound in the form of sol, or polysilazane.

### <Organometallic compound>

An organometallic compound relating to the present invention preferably contains at least one element selected from the group consisting of silicon (Si), aluminum (Al), lithium (Li), zirconium (Zn), titanium (Ti), tantalum (Ta), zinc (Zn), barium (Ba), indium (In), Tin (Sn), lanthanum (La), yttrium (Y), and niobium (Nb). Specifically, the organometallic compound more preferably contains at least one element selected from the group consisting of silicon (Si), aluminum (Al), lithium (Li), zirconium (Zr), titanium (Ti), zinc (Zn), and barium (Ba). Further, the organometallic compound still more preferably contains at least one element selected from the group consisting of silicon (Si), aluminum (Al), and lithium (Li).

The organometallic compound may be one capable of hydrolysis, and is not specifically limited, but a metal alkoxide is exemplified as a preferable organometallic compound.

The foregoing metal alkoxide is represented by the following General Formula (I).

General Formula (I): MR²ₘ(OR¹)ₙ₋ₘ

In General Formula (I), M represents a metal with respect to an oxidation number ofn; R¹ and R² each independently represent an alkyl group; m represents an integer of 0 to (n - 1); R¹ and R² may be identical to each other, and may be different from each other; R¹ and R² each preferably represent an alkyl group having 4 carbon atoms or less, and for example, more preferably represent a lower alkyl group such as a methyl group CH₃ (hereinafter, referred to as Me), an ethyl group C₂H₅ (hereinafter, referred to as Et), a propyl group C₃H₇ (hereinafter, referred to as Pr), an isopropyl group i-C₃H₇ (hereinafter, referred to as i-Pr), a butyl group C₄H₉ (hereinafter, referred to as Bu), an isobutyl group i-C₄H₉ (hereinafter, referred to as i-Bu), or the like.

Preferable examples of metal alkoxide represented by the foregoing General Formula (I) include lithium ethoxide LiOEt, niobium ethoxide Nb (OEt)₅, Magnesium isopropoxide Mg (OPr-i)₂, aluminum isopropoxide Al (OPr-i)₃, zinc propoxide Zn (OPr)₂, tetraethoxy silane Si (OEt)₄, titanium isopropoxide Ti (OPr-i)₄, Barium ethoxide Ba (OEt)₂, Barium isopropoxide Ba (OPr-i)₂, triethoxy borane B (OEt)₃, zirconium propoxide Zn (OPr)₄, lanthanum propoxide La (OPr)₃, Yttrium propoxide Y (OPr)₃, lead isopropoxide Pb (OPr-i)₂, and so forth. Any of these metal alkoxides is commercially available, and can be easily purchased in the market As to the metal alkoxide, a low condensate thereof obtained via partial hydrolysis is also commercially available, and the low condensate is possible to be used as raw material.

### <Inorganic oxide>

An inorganic oxide relating to the present invention is formed from sol for which the above-described organometallic compound is used as raw material, via local heating. Accordingly, it is a feature that the inorganic oxide is oxide of an element such as silicon (Si), aluminum (Al), zirconium (Zn), titanium (Ti), tantalum (Ta), zinc (Zn), barium (Ba), indium (In), Tin (Sn), niobium (Nb) or the like, which is contained in the organometallic compound.

Examples thereof include silicon oxide, aluminum oxide, zirconium oxide and so forth. Of these, silicon oxide is preferable.

In the present invention, as a method of forming inorganic oxide from an organometallic compound, preferably used are a so-called sol-gel method, and a method of coating polysilazane.

### <Sol-gel method>

"Sol-gel method" is referred to as a method by which after an organometallic compound is subjected to hydrolysis or the like to obtain sol, and subjected to a dehydration treatment to obtain gel, this gel is further subjected to a heat treatment to prepare metal oxide glass in a certain shape (film shape, particle shape, fiber shape, or the like). Multicomponent system metal oxide glass is possible to be obtained by a method by which a plurality of different sol solutions are mixed, a method by which other metal ions are added therein, or the like.

Inorganic oxide is preferably prepared by a sol-gel method possessing the following steps.

That is, it is more preferably prepared by a sol-gel method possessing a step in which an organometallic compound is subjected to hydrolysis and dehydrocondensation while adjusting a pH to 4.5 - 5.0 in reaction liquid containing at least water and an organic solvent, in the presence of boron ions employing halogen ions as a solvent to obtain a reaction product, and another step in which the reaction product is subjected to heating at a temperature of 200°C or less to prepare glass, since micropores caused by a heat treatment at high temperature are not generated, and deterioration of films and so forth do not occur.

In the case of the foregoing sol-gel method, an organometallic compound used as raw material may be one for which hydrolysis is possible to be carried out, and is not specifically limited, but the foregoing metal alkoxide is exemplified as a preferable organometallic compound.

In the above-described sol-gel method, the organometallic compound may be used as it is for reaction, but preferably be diluted with a solvent and used for making the reaction control to be easy. The diluting solvent can dissolve the foregoing organometallic compound, and may be one capable of evenly being mixed with water. As such a diluting solvent, provided are aliphatic lower alcohols, and preferable examples thereof include methanol, ethanol, propanol, isopropanol, butanol, isobutanol, ethylene glycol, propylene glycol, and a mixture thereof Further, a solvent in which butanol, and butyl cellosolve are mixed, a solvent in which xylol, cellosolve acetate, methyl isobutyl ketone and cyclohexane are mixed, and so forth are also usable.

In cases where metal in the foregoing organometallic compound is Ca, Mg, Al or the like, since hydroxide is produced via reaction with water in the reaction liquid, and carbonate is produced in the presence of carbonate ion CO₃²⁻, resulting in a precipitate, it is preferable to add an alcohol solution of triethanol amine as a masking reagent into the reaction liquid. The organometallic compound to be mixed and dissolved in a solvent preferably has a concentration of 70% by weight or less, but is more preferably diluted in the range of 5 - 70% by weight to use it

The reaction liquid used in the foregoing sol-gel method contains at least water and an organic solvent. The foregoing organic solvent may be one to produce a homogeneous solution with water, or acid as well as alkali, and conventionally, the same one as each of aliphatic lower alcohols used for diluting the foregoing organometallic compound is preferably cited. Among the foregoing aliphatic lower alcohols, propanol, isopropanol, butanol and isobutanol each having a large numbe of carbon atoms are preferable. This is because growth of metal oxide glass to be produced is stable. A water concentration of 0.2 - 50 mol/L is preferable as a water ratio.

In the foregoing sol-gel method, an organic metal compound is hydrolyzed in the foregoing reaction liquid in the presence of boron ions employing halogen ions as a catalyst. As compounds each to release the foregoing boron ion B³⁺, preferably cited is trialkoxy borane B (OR)₃. Among those, triethoxy, borane B (OEt)₃ is more preferable. Further, the B³⁺ ion concentration in the foregoing reaction liquid is preferable in the range of 1,0 - 10.0 mol/L.

As the foregoing halogen ions, preferably cited are fluorine ions and/or chlorine ions. That is, fluorine ions may be only used, and chlorine ions may be also only used, but a mixture of those ions may be also used. The compound to be used is one in which fluorine ions and/or chlorine ions are produced in the above-described reaction liquid, and preferable examples of a fluorine ion source include ammonium hydrogen fluoride NH₄HF · HF, sodium fluoride NaF and so forth, and preferable examples of a chlorine ion source include ammonium chloride NH₄Cl and so forth.

The foregoing concentration of halogen ions in the reaction liquid is different, depending on thickness of a film made from an inorganic composition having an inorganic matrix to be produced, and other conditions, but it is generally 0.01 - 2 mol/kg, and preferably 0.002 - 0.3 mol/kg based on the total weight of the foregoing reaction liquid containing a catalyst. When concentration of halogen ions is lower than 0.001 mol/kg, it is difficult to sufficiently hydrolyze the organometallic compound, resulting in difficulty of film formation. On the other hand, when concentration of halogen ions exceeds 2 mol/kg, any of the causes is not preferable since the inorganic matrix (metal oxide glass) to be produced is easy to become inhomogeneous.

In addition, when boron having been used during reaction is contained as a B₂O₃ component in a composition designed for an inorganic matrix to be obtained, a product material may be prepared by adding a calculated amount of an organic boron compound in accordance with the boron content, and when it is desired to remove boron therefrom, boron can be vaporized as boron methyl ester to remove it by heating it in the presence of methanol as a solvent, or via immersion into the methanol, after film formation.

In the case of the step in which an organometallic compound is subjected to hydrolysis and dehydrocondensation to obtain a reaction product, after a base component solution in which a predetermined amount of the foregoing organometallic compound is mixed and dissolved in a mixed solvent containing predetermined amounts of water and organic solvent, and a predetermined amount of reaction liquid containing a predetermined amount of the halogen ions are mixed at a predetermined ratio while sufficiently stirring to prepare a homogeneous reaction solution, a pH of the reaction solution is adjusted to a desired value with acid or alkali, accelerating the reaction via ripening for a few hours to obtain the reaction product. A predetermined amount of the foregoing boron compound is mixed and dissolved in a base component solution or reaction liquid in advance. Further, when alkoxy borane is used, it is advantageous that the alkoxy borane is dissolved in a base component solution together with another organometallic compound.

A pH of the foregoing reaction solution is selected depending on the objective, and when it is intended to form a film made from an inorganic composition possessing an inorganic matrix (metal oxide glass), for example, it is preferable that a pH is adjusted to the range of 4.5 - 5 employing an acid such as a hydrochloric acid or the like, and ripening is carried out. In this case, for example, it is useful to employ one in which Methyl Red and Bromocresol Green are mixed as an indicator.

In addition, the foregoing sol-gel method can be simply continued by additionally adding a base component solution and a reaction solution (including B3⁺ and halogen ions) having the same component and the same concentration sequentially at the same ratio while adjusting a pH to the predetermined pH to prepare a reaction product. The concentration of the foregoing reaction solution can be varied in the range of ± 50% by weight, the concentration of water (including acid or alkali) can be varied in the range of ± 30% by weight, and the concentration of halogen ions can be varied in the range of ± 30% by weight.

Next, a reaction product (a reaction solution after ripening) obtained in the preceding process is heated to a temperature of 200°C or less, followed by drying to prepare glass. In the case of heating, temperature is carefully elevated gradually in the range of specifically 50 - 70 °C, and it is preferable that temperature is further elevated after conducting a preliminary drying (solution sublimation) step. In cases where films are formed, this drying step is to be carried out to result in preparation of a nonporous film. Temperature at which beating and drying are conducted after the preliminary drying step is preferably 70 - 150°C, and more preferably 80 - 130°C.

### <Method of coating polysilazane>

The gas barrier layer of the present invention preferably contains inorganic oxide formed by locally heating a coating film after coating a ceramic precursor to form an inorganic oxide film via heating.

When the ceramic precursor contains polysilazane, a resin substrate is coated with a solution in which polysilazane represented by the following General Formula (II) and a catalyst in an organic solvent, if desired, are contained, and this solvent was vaporized and removed to leave a polysilazane layer having a layer thickness of 0.05 - 3.0 µm on the resin substrate. Then, the above-described polysilazane layer is subjected to locally heating in the presence of oxygen, active oxygen, and nitrogen in some cases, in the atmosphere containing water vapor, and it is preferable to utilize a method of forming a glass-like transparent coating film on the resin substate,

General Formula (II): - (SiR₁R₂-NR₃)ₙ-

In General Formula (II), R¹, R² and R³ are identical to each other, or are different from each other; and independently to each other represent a group selected from the group consisting of hydrogen or a substituted alkyl group in some cases, an aryl group, and a vinyl group or (trialkoxysilyl) alkyl group; or preferably from the group consisting of hydrogen, methyl, ethyl propyl, iso-propyl, butyl, isobutyl, tert-butyl, phenyl, vinyl or 3-(triethoxysilyl) propyl and 3-(trimethoxysilylpropyl); and n represents an integer wherein the n is set in such a way that the polysilazane has a number average molecular weight of 150 - 150,000 g/mol.

Preferably usable examples of the catalyst include basic catalysts specifically such as N, N-diethyl ethanol amine, N, N-dimethyl ethanol amine, triethanol amine, triethyl amine and 3-morpholinopropyl amine, or N-heterocyclic compounds. The catalyst generally has a concentration of 0.1 -10 mol%, and preferably has a concentration of 0.5 - 7 mol%, based on polysilazane.

In a preferred embodiment, employed is a solution containing perhydropolysilazane in which R¹, R² and R³ each are a hydrogen atom.

In another preferred embodiment, the coating in the present invention possesses at least one polysilazane represented by the following General Formula (III).

General Formula (III): -(SiR₁R₂-NR₃)ₙ-(SiR₄R₅-NR₆)ₚ-

In General Formula (III), R¹, R²,R³, R⁴, R⁵ and R⁶ independently to each other represent hydrogen or a substituted alkyl group in some cases, an aryl group, a vinyl group or (trialkoxysilyl) alkyl group; and in this case, n and p each represent an integer wherein the n is set in such a way that the polysilazane has a number average molecular weight of 150 - 150,000 g/mol.

Specifically preferable are a compound in which R¹, R³ and R⁶ each represent hydrogen, and R², R⁴ and R⁵ each represent methyl; a compound in which R¹, R³ and R⁶ each represent hydrogen, R² and R⁴ each represent methyl; and R⁵represents vinyl; and a compound in which R¹, R³, R⁴ and R⁶ each represent hydrogen, R² and R⁵ each represent methyl.

Further, similarly preferable is a solution containing at least one polysilazane represented by the following General Formula (IV).

General Formula (IV): -(SiR₁R₂-NR₃)ₙ-(SiR₄R₅-NR₆)ₚ-(SiR₇P₈-NR₉)_{q-}

In General Formula (IV), R¹, R²,R³, R⁴, R⁵, R⁶, R⁷, R⁸ and R⁹ independently to each other represent hydrogen or a substituted alkyl group in some cases, an aryl group, a vinyl group or (trialkoxysilyl) alkyl group; and in this case, n, p and q each represent an integer wherein the n is set in such a way that the polysilazane has a number average molecular weight of 150 - 150,000 g/mol.

Specifically preferable is a compound in which R¹, R³ and R⁶ each represent hydrogen; R², R⁴, R⁵ and R⁸ each represent methyl; R⁹ represents (triethoxysilyl) propyl; and R⁷ represents alkyl or hydrogen.

The polysilazane in a solvent generally has a content of 1 - 80% by weight; preferably has a content of 5 - 50% by weight; and more preferably has a content of 10 - 40% by weight

The solvent does not contain water and a reactive group (for example, a hydroxyl group or an amine group) and is inactively organic with respect to polysilazane, and an aprotic solvent is preferable as the solvent. Examples thereof include aliphatic or aromatic hydrocarbon, halogen hydrocarbon, ester such as ethyl acetate or butyl acetate, ketone such as acetone or methylethyl ketone, ether such as tetrahydrofuran or dibutyl ether, or mono or polyalkylene glycol dialkyl ether (diglymes), and a mixture formed from a solvent thereof

An additional component for the above-described polysilazane solution can be a binder different from those conventionally used for preparation of a coating material. Examples thereof include cellulose ether and cellulose ester such as ethyl cellulose, nitro cellulose, cellulose acetate or cellulose acetobutylate, a natural resin such as rubber or a rosin resin, or synthetic resins such as polymerization resins or condensation resins, for examples, aminoplast, specifically a urea resin, a melamine formaldehyde resin, an alkyd resin, an acrylic resin, polyester or modified polyester, epoxide, polyisocyanate or blocked polyisocyanate, or polysiloxane.

Further, other components of the polysilazane concoction may be additives influencing viscosity of the concoction, wettability of a base material, film formation, lubrication action, evacuation or the like, or inorganic particles each made of SiO₂ TiO₂, ZrO₂ or Al₂O₃.

A closely dense glass-like layer exhibiting excellently high barrier action with respect to gas because of no presence of cracks and pores can be prepared by a method of the present invention.

The coating film to be formed is preferably set to have a thickness of 100 nm to 2 µm.

### (Scratch protection layer)

In the present invention, a scratch protection layer is preferably formed as an outermost layer provided in a film mirror. The scratch protection layer is formed for scratch protection.

The scratch protection layer can be formed of an acrylic resin, a urethane based resin, a melamine based resin, an epoxy based resin, an organic silicate compound, a silicone based resin or the like. Specifically, a silicone based resin and an acrylic resin and so forth are preferable in view of hardenability, durability and so forth. Further, those made of an actinic energy radiation curable type acrylic resin or a thermosetting acrylic resin are preferable.

The actinic energy radiation curable type acrylic resin or the thermosetting acrylic resin means a composition containing polyfunctional acrylate and acrylic oligomer as a polymerization curable component, or a reactive diluent In addition, those containing a photo initiator, a photo sensitizer, a thermal polymerization initiator, a modifier or the like may be used.

An acrylic oligomer means those each in which a reactive acrylic group is bonded to an acrylic resin skeleton. In addition, examples thereof include polyester acrylate, urethane acrylate, epoxy acrylate, polyester acrylate and so forth, and those in which an acrylic group is bonded to an adamant skeleton such as melamine, an isocyanuric acid or the like are also possible to be used.

Further, the reactive diluent serves a function of a solvent in a coating process as a coating agent medium, and a reactive diluent itself has a group reacted with a monofunctional or polyfunctional acrylic olygomer, and becomes a copolymer component for a coating film.

Usable examples of the commercially available polyfunctional acrylic curable coating material include products such as product name DIABEAM (Registered Trademark) series and so forth ( produced by Mitsubishi Rayon Co., Ltd), product name DECONAL (Registered Trademark) series and so forth (produced by Nagase ChemteX Corporation), product name NK ESTER (Registered Trademark) series and so forth (produced by Shin Nakamura Kagaku Co., Ltd.), product name UNIDIC (Registered Trademark) series and so forth (produced by DIC Co., Ltd), product name ARONIX (Registered Trademark) series and so forth (produced by Toa Gosei Co., Ltd.), product name BLEMMER (Registered Trademark) series and so forth (produced by NOF Corp.), product name KAYARAD (Registered Trademark) series and so forth (produced by Nihon Kayaku Co., Ltd), product name LIGHT ESTER (Registered Trademark) series and so forth (produced by Kyoeisha Chemical Co., Ltd.), product name LIGHT ACRYLATE (Registered Trademark) series and so forth (produced by Kyoeisha Chemical Co., Ltd.), and so forth.

In the present invention, various additives can be further blended in the scratch protection layer, if desired, as long as the effect of the present invention is not deteriorated. Usable examples thereof include an antioxidants, a light stabilizer, a stabilizer such as a UV absorbent or the like, a surfactant, a smoothing agent, an antistatic agent, and so forth.

The smoothing agent is effective to reduce the roughened surface when specifically coating a functional layer. As a smoothing agent, preferable is a silicone based smoothing agent such as a dimethyl polysiloxane - polyoxy alkylene copolymer (for example, SH 190, produced by Dow Coming Toray Co., Ltd.).

### (Total thickness of film mirror)

A film mirror relating to the present invention preferably has a total thickness of 75 - 250 µm; more preferably has a total thickness of 90 - 230 µm; and still more preferably has a total thickness of 100 - 220 µm in view ofprevention of deflection, regular reflectance, handling and so forth.

### (Reflection device for solar heat power generation)

A film mirror of the present invention is preferably usable in order to collect solar heat. The film mirror can be used singly as a solar heat collecting mirror, but the resin substrate is designed to be sandwiched by an adhesion layer and another adhesion layer, and more preferably usable is a reflection device for solar heat power generation, possessing a different substrate such as specifically a metal substrate and attached thereon, the film mirror provided via the adhesion layer coated on a surface of the resin substrate on a side where the silver reflection layer is present, as well as the film mirror provided via the other adhesion layer coated on an opposite surface of the resin substrate.

It is an embodiment that when using it as a reflection device for solar heat power generation, the reflection device is arranged to be gutter-shaped (half-cylindrical); a cylindrical member having fluid in the inside at the center of the semicircle is provided; the fluid in the inside is heated by collecting solar heat into the cylindrical member; and the thermal energy is converted to generate electric power. It is also another embodiment that plate-shaped reflection devices are placed at plural locations; solar heat reflected by each of the reflection devices is collected at a reflection mirror (central reflection mirror); and thermal energy obtained via reflection at the reflection mirror is converted at a power generation section to generate electric power. Specifically in the latter embodiment, a film mirror of the present invention is suitably utilized since high regular reflectance is desired for a reflection device to be used.

### <Adhesion layer>

The adhesion layer is not specifically limited, and for example, any of a dry laminate agent, a wet laminate agent, an adhesion agent, a heat sealing agent, a hot melt agent and so forth is usable.

For example, polyester based resins, urethane based resins, polyvinyl acetate based resins, acrylic resins, nitrile rubber and so forth are employed.

The laminating method is not specifically limited, and it is preferable to continuously conduct, for example, with a roll system in view of economy and productivity.

It is preferable that the adhesion layer conventionally has a thickness of roughly 1 ― 50 µm in view of an adhesion effect, a drying speed and so forth.

Another substrate on which a film mirror appropriately used in the present invention may be one capable of providing protection for a silver reflection layer, and usable examples thereof include an acrylic film or sheet, a polycarbonate film or sheet, a polyacrylate film or sheet, a polyethylene naphthalate film or sheet, a polyethylene terephthalate film or sheet, a plastic film or sheet such as a fluorine film, a resin film or sheet in which titanium oxide, silica, aluminum powder, copper powder or the like is kneaded, and a resin film or sheet on which this kneaded resin is coated or which is subjected to a surface treatment via metal evaporation or the like.

Thickness of the film or sheet to be attached onto is not specifically limited, but it is preferable that the thickness is conventionally 12 ― 250 µm.

Further, before other substrates each on which a film mirror of the present invention is attached, the film mirror may be attached on the substrate after forming concave and convex portions on the substrate; the concave and convex portions may be formed on the substrate after attaching the film mirror on the substrate; and the concave and convex portions may be formed on the substrate while attaching the film mirror on the substrate at the same time.

### <Metal substrate>

Usable examples of metal substrates used in the solar heat collecting mirror of the present invention include a steel plate, a copper plate, an aluminum plate, an aluminum plated steel plate, an aluminum system alloy plated steel plate, a copper plated steel plate, a tin plated steel plate, a chromium plated steel plate, and a metallic material exhibiting high thermal conductivity such as a stainless steel plate or the like.

In the present invention, specifically preferable are a plated steel plate, a stainless steel plate, an aluminum plate and so forth each exhibiting excellent corrosion resistance.

### EXAMPLE

Next, the present invention will be specifically described referring to examples, but the present invention is not limited thereto.

### [Preparation of film mirror]

### (Preparation of film mirror 1)

Nine percent by weight of a UV absorbent (comparative compound 1: TINUVIN 928, produced by Ciba Japan K.K.) were contained in an acrylic film during film formation of the acrylic film to prepare a resin substrate film having a thickness of 100 µm. Resins mixed in toluene were coated on this film by a gravure coating method so as to make a polyester resin (POLYESTER SP-181, produced by Nippon Synthetic Chemical Industry Co., Ltd.), a melamine resin (SUPER BECKAMING J-820, produced by DIC Co., Ltd.), TDI based isocyanate (2,4-tolylene diisocyanate) and HDMI based isocyanate (1, 6-hexamethylene diisocyanate) to be a resin solid content ratio of 20: 1 : 1 : 2, and also to be a solid content concentration of 10% by weight to form a silver adjacent layer having a thickness of 0.1 µm, and a silver reflection layer having a thickness of 80 nm was formed on the silver adjacent layer for the silver reflection layer via vacuum evaporation. Resins mixed so as to make a polyester based resin and TDI (2, 4-tolylene diisocyanate) based isocyanate to be a resin solid content ratio of 10 : 2 were coated on the silver reflection layer by a gravure coating method as an adjacent layer on the aside away from the light incidence side of the silver reflection layer to prepare a layer having a thickness of 0.1 µm. Thus, film mirror 1 was prepared as a comparative example.

### (Preparation of film mirror 2)

Film mirror 2 as a comparative example was prepared similarly to preparation of film mirror 1, except that 17% by weight of a UV absorbent (comparative compound 1: TINUVIN 928, produced by Ciba Japan K.K.) were contained in an acrylic film.

### (Preparation of film mirror 3)

Film mirror 3 as a comparative example was prepared similarly to preparation of film mirror 1, except that a UV absorbent (comparative compound 1: TINUVIN 928, produced by Ciba Japan K.K.) was replaced by a UV absorbent (comparative compound 2: UVINUL 3049, produced by BASF).

### (Preparation of film mirror 4)

Film mirror 4 of the present invention was prepared similarly to preparation of film mirror 1, except that a UV absorbent (comparative compound 1: TINUVIN 928, produced by Ciba Japan K.K.) was replaced by a UV absorbent (compound 1 of the present invention: TVINUL 400, produced by Ciba Japan K.K.) whose 4% by weight were contained in an acrylic film.

### (Preparation of film mirror 5)

Film mirror 5 of the present invention was prepared similarly to preparation of film mirror 4, except that 9% by weight of a UV absorbent (compound 1 of the present invention: TINUVIN 400, produced by Ciba Japan K.K.) were contained in an acrylic film.

### (Preparation of film mirror 6)

Film mirror 6 of the present invention was prepared similarly to preparation of film mirror 5, except that a UV absorbent (compound 1 of the present invention: TINUVIN 400, produced by Ciba Japan K.K.) was replaced by a UV absorbent (compound 2 of the present invention: LA-51, produced by ADEKA Corporation).

### (Preparation of film mirror 7)

Film mirror 7 of the present invention was prepared similarly to preparation of film mirror 5, except that a UV absorbent (compound 1 of the present invention: TINUVIN 400, produced by Ciba Japan K.K.) was replaced by a UV absorbent (compound 3 of the present invention: UVINUL 3035, produced by BASF).

### (Preparation of film mirror 8)

Film mirror 8 of the present invention was prepared similarly to preparation of film mirror 5, except that 14% by weight of a UV absorbent (compound 1 of the present invention: TINUVIN 400, produced by Ciba Japan K.K.) were contained in an acrylic film.

### (Preparation of film mirror 9)

Film mirror 9 of the present invention was prepared similarly to preparation of film mirror 5, except that 17% by weight of a UV absorbent (compound 1 of the present invention: TINUVIN 400, produced by Ciba Japan K.K.) were contained in an acrylic film.

### (Preparation of film mirror 10)

Film mirror 10 of the present invention was prepared similarly to preparation of film mirror 5, except that 0.3% by weight of an antioxidant {1,2,2'-methylene bis (4,6-di-butylphenyl) octylphosphite} were added in a resin layer in which a polyester resin, a melamine resin, TDI based isocyanate and HDMI based isocyanate were mixed, with respect to resins in the layer.

### (Preparation of film mirror 11)

Film mirror 11 was prepared similarly to preparation of film mirror 10, except that a perhydropolysilazane solution (3% by weight of a dibutyl ether solution NL 120, produced by CLARIANT) was bar-coated between a silver reflection layer and a resin layer in which a polyester resin, a melamine resin, TDI based isocyanate and HDMI based isocyanate were mixed, so as to give a dry film thickness of 100 nm, followed by naturally drying for 3 minutes, and subsequently annealing in an oven at 90°C for 30 minutes to prepare a gas barrier having a humidity of 0.5 g/d/24h.

### (Preparation of film mirror 12)

An acrylate based resin was coated as an adhesion layer on an adjacent layer (a resin layer) on the side most remote from the light incidence side of the silver reflection layer in the foregoing film mirror 1 by a gravure coating method so as to give a film thickness of 0.5 µm, and a polyethylene terephthalate (PET) was attached thereon to prepare film mirror 12 as a comparative example.

### (Preparation of film mirror 13)

An acrylate based resin was coated as an adhesion layer on an adjacent layer (a resin layer) on the side most remote from the light incidence side of the silver reflection layer in the foregoing film mirror 5 by a gravure coating method so as to give a film thickness of 0.5 µm, and a polyethylene terephthalate (PET) was attached thereon to prepare film mirror 13 of the present invention.

### [Preparation of reflection device for solar heat power generation]

Each of the resulting film mirrors 1 ― 13 described above was attached onto a stainless (SUS 304) plate which is 4 cm long, 5 cm wide, and 0.1 mm thick, via an adhesion layer having a thickness of 3 µm, wherein each of the foregoing film mirrors was placed in such a way that the surface of an acrylic film became the upper surface, to prepare each ofthe reflection devices for solar heat power generation 1 ― 13.

### [Evaluation of reflection device for solar heat power generation]

As to the resulting reflection devices for solar heat power generation as described above, evaluations of regular reflectance, light resistance, moist heat resistance, and heat resistance · light resistance were made.

### (Regular reflectance)

A spectrophotometer "UV 265" manufactured by Shimadzu Corporation equipped with an integrating sphere reflection accessory device was remodeled, and adjusted so as to make an incident angle of incident light to be 5° with respect to a normal line to the reflecting plane to measure regular reflectance at a reflecting angle of 5°. As to evaluations, it was measured as mean reflectance at a wavelength of 350 ― 700 nm.

### (Test A: Light resistance test)

After samples each were exposed to UV radiation at 65 °C for 10 days employing EYE Super UV Tester manufactured by IWASAKI Electric Co., Ltd., regular reflectance was measured by the above-described method to calculate a falling rate of the regular reflectance before and after the samples each were exposed to UV radiation, and evaluations thereof were made in accordance with the following criteria.
5: A regular reflectance falling rate of less than 5%
4: A regular reflectance falling rate of at least 5% and less than 10%
3: A regular reflectance falling rate of at least 10% and less than 15%
2: A regular reflectance falling rate of at least 15% and less than 20%
1: A regular reflectance falling rate of at least 20%

### (Test B: Moist heat resistance test)

Samples each were exposed to UV radiation at 60 °C for 5 days employing EYE Super UV Tester manufactured by IWASAKI Electric Co., Ltd. after standing at 85 °C and 85%RH for 10 days. This test was repeated 3 times, and regular reflectance was measured by the same method as that of light reflectance measurement described above to calculate a falling rate ofthe regular reflectance before and after conducting an enforced degradation test. Then, evaluations thereof were made in accordance with the following criteria.
5: A regular reflectance falling rate of less than 5%
4: A regular reflectance falling rate of at least 5 % and less than 10%
3: A regular reflectance falling rate of at least 10% and less than 15%
2: A regular reflectance falling rate of at least 15% and less than 20%
1: A regular reflectance falling rate of at least 20%

### (Test C: Heat resistance · light resistance test)

Samples each were exposed to UV radiation at 65 °C for 5 days employing EYE Super UV Tester manufactured by IWASAKI Electric Co., Ltd. after standing at 85 °C for 1000 hours, and evaluated similarly to the above-described light resistance test.

### (Measurement of absorbance ratio of absorption maximum peak of UV absorbent)

Absorbance at an absorption maximum peak of a UV absorbent was measured employing a spectrophotometer "UV 265" manufactured by Shimadzu Corporation to calculate Aa/Ab as an absorbance ratio at the absorption maximum peak.

Evaluation results together with Aa/Ab as an absorbance ratio are shown in Table 1.

**Table 1**

| Reflection device for solar heat power generation No. | Film mirror No. | UV absorbent | | | Antioxidant | Gas barrier layer | Evaluation | | | | Remarks |
|---|---|---|---|---|---|---|---|---|---|---|---|
| | | Kinds | Content (% by weight) | Aa/Ab | | | Regular reflectance | Test A | Test B | Test C | |
| 1 | 1 | Comparative compound 1 | 9 | 1.0 | Absence | Absence | 95% | 2 | 1 | 2 | Comparative example |
| 2 | 2 | Comparative compound 1 | 17 | 1.0 | Absence | Absence | 94% | 3 | 1 | 1 | Comparative example |
| 3 | 3 | Comparative compound 2 | 9 | 0.6 | Absence | Absence | 95% | 2 | 1 | 2 | Comparative example |
| 4 | 4 | Compound 1 of the present invention | 4 | 1.8 | Absence | Absence | 96% | 2 | 2 | 4 | Present invention |
| 5 | 5 | Compound 1 of the present invention | 9 | 1.8 | Absence | Absence | 95% | 3 | 2 | 3 | Present invention |
| 6 | 6 | Compound 2 of the present invention | 9 | 1.3 | Absence | Absence | 95% | 2 | 2 | 2 | Present invention |
| 7 | 7 | Compound 3 of the present invention | 9 | >>1.3 | Absence | Absence | 95% | 3 | 2 | 3 | Present invention |
| 8 | 8 | Compound 1 of the present invention | 14 | 1.8 | Absence | Absence | 95% | 4 | 3 | 2 | Present invention |
| 9 | 9 | Compound 2 of the present invention | 17 | 1.8 | Absence | Absence | 94% | 4 | 3 | 1 | Present invention |
| 10 | 10 | Compound 1 of the present invention | 9 | 1.8 | Presence | Absence | 95% | 4 | 4 | 4 | Present invention |
| 11 | 11 | Compound 1 of the present invention | 9 | 1.8 | Presence | Presence | 95% | 4 | 5 | 4 | Present invention |
| 12 | 12 | Comparative compound 1 | 9 | 1.0 | Absence | Absence | 95% | 2 | 1 | 1 | Comparative example |
| 13 | 13 | Compound 1 of the present invention | 9 | 1.8 | Absence | Absence | 95% | 3 | 2 | 3 | Present invention |

As is dear from Table 1, it is to be understood that each of properties of the reflective device for solar heat power generation in the present invention is superior to each of those of the reflective device for solar heat power generation as a comparative example. It is also to be understood that obtained can be a reflective device for solar heat power generation equipped with a film mirror having regular reflectance excellently to solar heat, and exhibiting excellent light resistance, moist heat resistance and heat resistance · light resistance, which is possible to sufficiently suppress fall of regular reflectance; is lightweight and flexible; and can be large-area-produced and mass-produced at low manufacturing cost.

## Claims

1. A film mirror comprising a resin substrate and provided thereon, a silver reflection layer and a layer comprising at least one UV absorbent, provided on a light incidence side beyond the resin substrate and the silver reflection layer,
wherein the at least one UV absorbent satisfies the following Formula 1:
Formula 1 Aa ≥ 1.2 x Ab
, where Aa represents absorbance at an absorption maximum peak in a wavelength range of 260 ― 320 nm, provided that the absorbance is set to 0 when no absorption peak is present in the wavelength range of 260 ― 320 nm, and Ab represents absorbance at an absorption maximum peak in a wavelength range of 321 ― 400 nm, provided that the absorbance is set to 0 when no absorption peak is present in the wavelength range of 321 ― 400 nm.

2. The film mirror of Claim 1,
wherein the layer comprising the at least one UV absorbent comprises a UV absorbent satisfying Formula 1 in an amount of 3 ― 14% by weight

3. The film mirror of Claim 1 or 2,
wherein the at least one UV absorbent comprises a UV absorbent comprising a triazine skeleton, a benzophenone skeleton or a cyanoacrylate skeleton.

4. The film mirror of any one of Claims 1 ― 3, comprising a gas barrier layer having a water vapor transmittance of 1 g/m²·day/µm or less at 40 °C and 90%RH, provided on a light incidence side beyond the resin substrate and the silver reflection layer.

5. The film mirror of any one of Claims 1 ― 4,
wherein the layer comprising the at least one UV absorbent comprises an acrylate based resin, and the UV absorbent satisfying Formula 1 comprises a cyanoacrylate skeleton.

6. The film mirror of any one of Claims 1 ― 5,
wherein the resin substrate comprises a layer containing polyethylene terephthalate called PET, or polyethylene naphthalate called PEN, the layer provided on a side away from the light incidence side beyond the silver reflection layer.

7. The film mirror ofany one of Claims 1 ― 6, comprising a layer containing a corrosion inhibitor, the layer being adjacent to the silver reflection layer.

8. The film mirror of any one of Claims 1 ― 7, comprising a scratch protection layer as an outermost layer.

9. The film mirror ofany one of Claims 1 ― 8, having a total thickness of 75 ― 250 µm.

10. A method of manufacturing a film mirror of any one of Claims 1 ― 9, comprising the step of forming the silver reflection layer via evaporation of silver.

11. A reflection device for solar heat power generation, comprising the film mirror of any one of Claims 1 ― 9 or a film mirror obtained by the method of Claim 10,
wherein the reflection device comprises a metal substrate and attached thereon, the film mirror provided via an adhesion layer coated on a surface of the resin substrate on a side where the silver reflection layer is present, or another adhesion layer coated on an opposite surface ofthe resin substrate.
